(19) Europäisches Patentamt
European Patent Office
Office européen des brevets

(11) **EP 4 672 088 A1**

(12) **EUROPEAN PATENT APPLICATION**

(43) Date of publication:
**31.12.2025 Bulletin 2026/01**

(21) Application number: **25184278.7**

(22) Date of filing: **20.06.2025**

(51) International Patent Classification (IPC):
**G06N 3/045** (2023.01)   **G06N 3/0455** (2023.01)
**G06N 3/088** (2023.01)   **G06N 3/091** (2023.01)
**G06N 20/00** (2019.01)

(52) Cooperative Patent Classification (CPC):
**G06N 3/045; G06N 3/0455; G06N 3/088;
G06N 3/091; G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.06.2024 IN 202421049443**

(71) Applicant: **Tata Consultancy Services Limited
Mumbai, Maharashtra 400 021 (IN)**

(72) Inventors:
• **SRIVASTAVA, Vivek**
**110001 New Delhi, Delhi (IN)**
• **DANGETI, Abhishek**
**500034 Hyderabad, Telangana (IN)**
• **GAJULA, Pavan Bhargav**
**560066 Bangalore, Karnataka (IN)**
• **JAMWAL, Vikram**
**411028 Pune, Maharashtra (IN)**

(74) Representative: **Goddar, Heinz J.
Boehmert & Boehmert
Anwaltspartnerschaft mbB
Pettenkoferstrasse 22
80336 München (DE)**

(54) **METHODS AND SYSTEMS FOR STYLE-BASED CLUSTERING OF ARTWORKS WITH PREFERENCE FEEDBACK**

(57) The disclosure relates generally to methods and systems for style-based clustering of artworks with preference feedback. Conventional techniques for artwork clustering rely on generic image representations derived from deep neural networks, thus heavily focused on content-level similarity rather than style-based similarity. According to the present disclosure, the plurality of artworks is passed through the artwork feature extractor to obtain the artwork features which are then passed to the autoencoder which encodes these features into lower dimension feature space. The clustering network layer employs the K-Means clustering algorithm to obtain the initial set of clusters. Then a preference feedback mechanism is employed with four operations: sample, expand, merge, and project, to obtain the style-based clusters. The sample operation facilitates the selection of samples for feedback. The preference feedback on the selected subset of the dataset is captured through the expand and merge operations which are projected onto the entire dataset.

FIG. 3

**Description**

CROSS-REFERENCE TO RELATED APPLICATIONS AND PRIORITY

The present application claims priority from Indian provisional application no. 202421049443, filed on June 27, 2024.

TECHNICAL FIELD

The disclosure herein generally relates to clustering, and, more particularly, to methods and systems for style-based clustering of artworks with preference feedback.

BACKGROUND

Artwork collectives are available to the public through formal spaces such as museums and art exhibitions. With digital platforms such as WikiArt and the Munch Museum's digital archive, the digitized artworks provide enhanced accessibility to a mass audience. Such digitization opens the possibility of presenting the collection of artworks to users in an interesting and more meaningful manner. Artist's style of the artworks is one such interesting presentation. An artist's style evolves over time, and a single artist might delve into or experiment with multiple styles, making it hard to ascribe a broad style to an artist. The fine-granular artistic styles from the artwork collection can perhaps be identified by clustering artworks based on style similarity in the artworks.

To effectively understand the stylistic diversity of an artist, a clustering technique is a promising approach. The clustering technique is fundamental to many data-centric applications. Due to the lack of a labeled dataset, the conventional techniques must rely on unsupervised clustering of artworks. Some recent conventional techniques for artwork clustering rely on generic image representations derived from deep neural networks. However, the features obtained from these deep neural networks fail to specifically capture artistic-level details from the artworks. As a result, clustering is heavily focused on the content similarity in the artworks as the clusters obtained tend towards content-level similarity rather than style-based similarity.

Recently, there have been several attempts to tune Artificial Intelligence (AI) based techniques leveraging human feedback and preferences, such as dialogue agents and code-generation copilots. Techniques such as Reinforcement Learning with Human Feedback (RLHF) and Direct Preference Optimization (DPO) have helped large language (and vision) models to perform efficiently on several downstream use cases for generative AI. Given the subjectivity in describing the style of an artwork, it becomes imperative to interpret the style through feedback preferences.

SUMMARY

Embodiments of the present disclosure present technological improvements as solutions to one or more of the above-mentioned technical problems recognized by the inventors in conventional systems.

In an aspect, a processor-implemented method for style-based clustering of artworks with preference feedback is provided. The method including the steps of: receiving a plurality of artworks associated with one or more styles from a repository, that are to be clustered based on a style of the one or more styles; clustering the plurality of artworks using an unsupervised clustering network model, to obtain one or more style-based clusters, wherein each of the one or more style-based clusters comprises one or more artworks of the plurality of artworks having a same style of the one or more styles, wherein the unsupervised clustering network model comprises an artwork feature extractor, an autoencoder, a clustering network layer, and a preference feedback layer, and wherein clustering the plurality of artworks using the unsupervised clustering network model to obtain the one or more style- based clusters comprising: (a) passing each artwork of the plurality of artworks, to the artwork feature extractor, to obtain a feature vector of each artwork, wherein the feature vector of each artwork comprises one or more neural features associated to each artwork; (b) passing the feature vector associated to each artwork of the plurality of artworks, to an encoder of the autoencoder, to generate a latent embedded feature space vector associated to each artwork of the plurality of artworks, wherein the latent embedded feature space vector associated to each artwork comprises non-linear mappings associated to each artwork; (c) passing the latent embedded feature space vector associated to each artwork of the plurality of artworks, to the clustering network layer, to generate one or more initial artwork clusters, wherein each initial artwork cluster of the one or more initial artwork clusters comprises one or more artworks of the plurality of artworks; (d) passing the one or more initial artwork clusters to the preference feedback layer, to specify one or more preference feedback operations required for each initial artwork cluster of the one or more initial artwork clusters; (e) perform the one or more preference feedback operations associated to each initial artwork cluster of the one or more initial artwork clusters, to obtain one or more intermediate artwork clusters, wherein the one or more preference feedback operations associated to each initial artwork cluster results in a new artwork cluster, or a deletion of an artwork cluster based on the style of each artwork present in each of the one or more initial artwork clusters; (f) passing the one or more intermediate artwork clusters to the clustering network layer, to obtain one or more initial style-based artwork clusters, wherein each of the one or more initial style-based artwork clusters comprises one or more artworks of the plurality of artworks clustered based on the style; and (g) repeating the steps (d) through (f) by considering the one or more initial style-based artwork clusters as the one or more initial artwork clusters, until a predefined criteria is met, to obtain the one or more style-based clusters.

In another aspect, a system for style-based clustering of artworks with preference feedback is provided. The system includes: a memory storing instructions; one or more Input/Output (I/O) interfaces; and one or more hardware processors coupled to the memory via the one or more I/O interfaces, wherein the one or more hardware processors are configured by the instructions to: receive a plurality of artworks associated with one or more styles from a repository, that are to be clustered based on a style of the one or more styles; cluster the plurality of artworks using an unsupervised clustering network model, to obtain one or more style-based clusters, wherein each of the one or more style-based clusters comprises one or more artworks of the plurality of artworks having a same style of the one or more styles, wherein the unsupervised clustering network model comprises an artwork feature extractor, an autoencoder, a clustering network layer, and a preference feedback layer, and wherein clustering the plurality of artworks using the unsupervised clustering network model to obtain the one or more style- based clusters comprising: (a) passing each artwork of the plurality of artworks, to the artwork feature extractor, to obtain a feature vector of each artwork, wherein the feature vector of each artwork comprises one or more neural features associated to each artwork; (b) passing the feature vector associated to each artwork of the plurality of artworks, to an encoder of the autoencoder, to generate a latent embedded feature space vector associated to each artwork of the plurality of artworks, wherein the latent embedded feature space vector associated to each artwork comprises non-linear mappings associated to each artwork; (c) passing the latent embedded feature space vector associated to each artwork of the plurality of artworks, to the clustering network layer, to generate one or more initial artwork clusters, wherein each initial artwork cluster of the one or more initial artwork clusters comprises one or more artworks of the plurality of artworks; (d) passing the one or more initial artwork clusters to the preference feedback layer, to specify one or more preference feedback operations required for each initial artwork cluster of the one or more initial artwork clusters; (e) perform the one or more preference feedback operations associated to each initial artwork cluster of the one or more initial artwork clusters, to obtain one or more intermediate artwork clusters, wherein the one or more preference feedback operations associated to each initial artwork cluster results in a new artwork cluster, or a deletion of an artwork cluster based on the style of each artwork present in each of the one or more initial artwork clusters; (f) passing the one or more intermediate artwork clusters to the clustering network layer, to obtain one or more initial style-based artwork clusters, wherein each of the one or more initial style-based artwork clusters comprises one or more artworks of the plurality of artworks clustered based on the style; and (g) repeating the steps (d) through (f) by considering the one or more initial style-based artwork clusters as the one or more initial artwork clusters, until a predefined criteria is met, to obtain the one or more style-based clusters.

In yet another aspect, there are provided one or more non-transitory machine-readable information storage mediums comprising one or more instructions which when executed by one or more hardware processors cause: receiving a plurality of artworks associated with one or more styles from a repository, that are to be clustered based on a style of the one or more styles; clustering the plurality of artworks using an unsupervised clustering network model, to obtain one or more style-based clusters, wherein each of the one or more style-based clusters comprises one or more artworks of the plurality of artworks having a same style of the one or more styles, wherein the unsupervised clustering network model comprises an artwork feature extractor, an autoencoder, a clustering network layer, and a preference feedback layer, and wherein clustering the plurality of artworks using the unsupervised clustering network model to obtain the one or more style- based clusters comprising: (a) passing each artwork of the plurality of artworks, to the artwork feature extractor, to obtain a feature vector of each artwork, wherein the feature vector of each artwork comprises one or more neural features associated to each artwork; (b) passing the feature vector associated to each artwork of the plurality of artworks, to an encoder of the autoencoder, to generate a latent embedded feature space vector associated to each artwork of the plurality of artworks, wherein the latent embedded feature space vector associated to each artwork comprises non-linear mappings associated to each artwork; (c) passing the latent embedded feature space vector associated to each artwork of the plurality of artworks, to the clustering network layer, to generate one or more initial artwork clusters, wherein each initial artwork cluster of the one or more initial artwork clusters comprises one or more artworks of the plurality of artworks; (d) passing the one or more initial artwork clusters to the preference feedback layer, to specify one or more preference feedback operations required for each initial artwork cluster of the one or more initial artwork clusters; (e) perform the one or more preference feedback operations associated to each initial artwork cluster of the one or more initial artwork clusters, to obtain one or more intermediate artwork clusters, wherein the one or more preference feedback operations associated to each initial artwork cluster results in a new artwork cluster, or a deletion of an artwork cluster based on the style of each artwork present in each of the one or more initial artwork clusters; (f) passing the one or more intermediate artwork clusters to the clustering network layer, to obtain one or more initial style-based artwork clusters, wherein each of the one or more initial style-based artwork clusters comprises one or more artworks of the plurality of artworks clustered based on the style;

and (g) repeating the steps (d) through (f) by considering the one or more initial style-based artwork clusters as the one or more initial artwork clusters, until a predefined criteria is met, to obtain the one or more style-based clusters.

In an embodiment, passing the one or more initial artwork clusters to the preference feedback layer, to specify one or more preference feedback operations required for each initial artwork cluster of the one or more initial artwork clusters, by: selecting one or more artworks from each of the one or more initial artwork clusters, using a predefined percentage value associated to each initial artwork cluster; determining the one or more preference feedback operations required for each initial artwork cluster based on the one or more artworks selected for each of the one or more initial artwork clusters, wherein the one or more preference feedback operations comprises one or more expand operations and one or more merge operations; and projecting the one or more preference feedback operations determined for each initial artwork cluster of the one or more initial artwork clusters.

In an embodiment, the predefined criteria is defined as one of: (i) a metric value determined for the one or more initial style-based artwork clusters is decreasing between consecutive iterations, and (ii) the one or more preference feedback operations required for each initial artwork cluster are not present.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an exemplary block diagram of a system for style-based clustering of artworks with preference feedback, in accordance with some embodiments of the present disclosure.

FIGS. 2A-2B illustrate exemplary flow diagrams of a processor-implemented method for style-based clustering of artworks with preference feedback, using the system of FIG. 1, in accordance with some embodiments of the present disclosure.

FIG. 3 shows an exemplary architecture of an unsupervised clustering network model, in accordance with some embodiments of the present disclosure.

FIG. 4 is a flowchart showing the steps for passing the one or more initial artwork clusters to the preference feedback layer, to specify one or more preference feedback operations required for each initial artwork cluster of the one or more initial artwork clusters, in accordance with some embodiments of the present disclosure.

FIG. 5 shows an outcome of exemplary preference feedback operations of the preference feedback mechanism on a set of clusters comprising of artworks, in accordance with some embodiments of the present disclosure.

FIG. 6A shows comparison of style-based clustering results of a generic deep embedded clustering model and the unsupervised clustering network model of the present disclosure on Wikiart dataset artworks after a single feedback iteration.

FIG. 6B shows comparison of style-based clustering results of a generic deep embedded clustering model and the unsupervised clustering network model of the present disclosure on Edvard Munch digital archive artworks after a single feedback iteration.

FIGS. 7A-7C are graphs showing results of quantitative and guidance metrics for Wikiart dataset for different number of initial clusters, in accordance with some embodiments of the present disclosure.

FIGS. 7D-7F are graphs showing results of quantitative and guidance metrics for Edvard Munch archive for different number of initial clusters, in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The present disclosure solves the technical problems in the art with the methods and systems for style-based clustering of artworks with preference feedback, which discloses a preference feedback mechanism or loop with four operations: sample, expand, merge, and project. The sample operation facilitates the selection of samples for feedback. The preference feedback on the selected subset of the dataset is captured through the expand and merge operations. Finally, the preference feedback is projected onto the entire dataset through the project operation. The methods and systems of the present disclosure drive a generic clustering models to cluster artworks based on artistic style with the introduction of minimal preference feedback.

According to the methods and systems of the present disclosure, the preference feedback mechanism is designed with the following objectives to ease the process of providing the feedback while capturing the artistic similarity between the artworks:

(i) Feedback with no additional information about artworks: In applications such as topic-based document clustering, the documents contain text that would include information that might help the user to categorize based on topic. For example, for clustering newspapers, the text might contain the country for which the issue is being discussed in the newspaper. For mobile applications clustering, the type of mobile applications would help the user categorize them. In the case of artworks, the style information for an artwork is relatively harder and ambiguous to define. The information that is available for an artwork such as art periods and genres might not be enough to understand the artistic style and provide the feedback.

(ii) Feedback on a very few examples: It is generally difficult for a user to evaluate a cluster based on a large number of samples presented to them. Displaying all the artworks present in a cluster is also not feasible for larger data sets as the user would have to compare across each artwork. Conventional techniques such as context-assisted face clustering framework display 10 images per cluster to the user and the user is asked to merge the cluster with similar faces. This technique employs face detection to create the initial set of clusters which is not applicable to clustering artworks. The conventional techniques in this area are not applicable for forming clusters based on stylistically similar artworks as their problem focuses on the retrieval of images.

(iii) Minimal-iterative feedback: The earlier works on preference feedback for clustering require multiple iterations of the feedback to produce the best results. Some conventional techniques require the user to provide human feedback for 5-6 iterations to obtain the best results. A few methods exist that are able to cluster data points only after a single iteration, but these clustering methods focus on specific applications and are only applicable to data that has text information readily available.

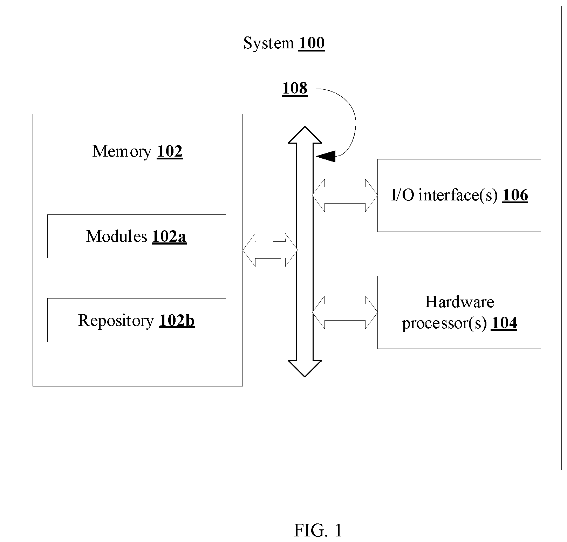

Referring now to the drawings, and more particularly to FIG. 1 through FIG. 7F, where similar reference characters denote corresponding features consistently throughout the figures, there are shown preferred embodiments, and these embodiments are described in the context of the following exemplary system and/or method.

FIG. 1 is an exemplary block diagram of a system 100 for style-based clustering of artworks with preference feedback, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface (GUI), and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

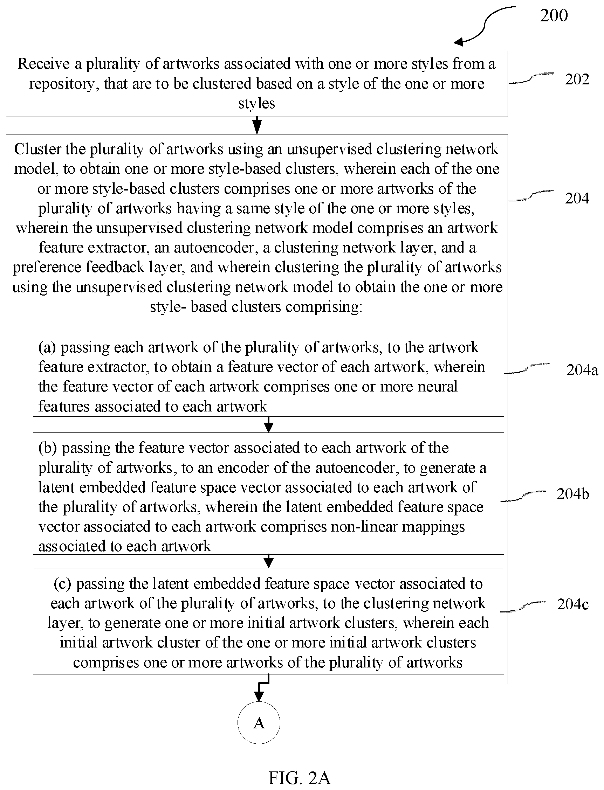

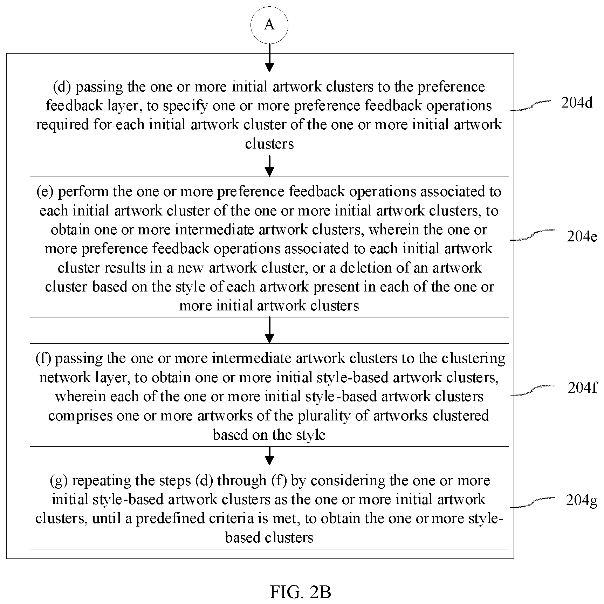

Referring to FIGS. 2A-2B, components and functionalities of the system 100 are described in accordance with an example embodiment of the present disclosure. For example, FIGS. 2A-2B illustrate exemplary flow diagrams of a processor-implemented method 200 for style-based clustering of artworks with preference feedback, using the system of FIG. 1, in accordance with some embodiments of the present disclosure. Although the steps of the method 200 shown in FIGS. 2A-2B including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 202 of the method 200, the one or more hardware processors 104 of the system 100 are configured to receive a plurality of artworks that are to be clustered based on a style of the one or more styles. The plurality of artworks is associated with the one or more styles. In an embodiment, the one or more styles include but is not limited to an artist style, an artwork pattern style, an artwork type style, an artwork content style, or a combination thereof. In an embodiment, the plurality of artworks is received from a repository 102b such as WikiArt dataset.

At step 204 of the method 200, the one or more hardware processors 104 of the system 100 are configured to cluster the plurality of artworks received at step 202 of the method 200 to obtain one or more style-based clusters. Each of the one or more style-based clusters includes one or more artworks of the plurality of artworks having the same style of the one or more styles.

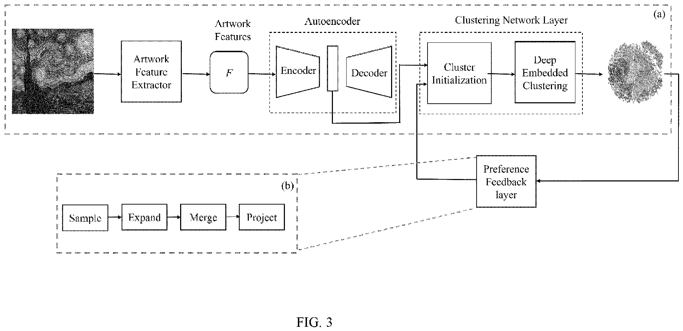

An unsupervised clustering network model is employed in the present disclosure to cluster the plurality of artworks into one or more style-based clusters. FIG. 3 shows an exemplary architecture of an unsupervised clustering network model, in accordance with some embodiments of the present disclosure. As shown in FIG. 3, the unsupervised clustering network model comprises an artwork feature extractor, an autoencoder, a clustering network layer, and a preference feedback layer.

Clustering the plurality of artworks using the unsupervised clustering network model to obtain the one or more style-based clusters is explained through steps 204a to 204g.

At step 204a, each artwork of the plurality of artworks is passed to the artwork feature extractor to obtain a feature vector of each artwork of the plurality of artworks. The feature vector of each artwork includes one or more neural features associated with each artwork. In an embodiment, the artwork feature extractor is a Deep Convolutional Network model (DenseNet) that connects each layer to all layers of the network before it in a feed-forward fashion. This it is performed so the number of connections present is equal to $L(L + 1)/2$. Each layer uses the feature maps of all the previous layers as input and its own feature maps are used as input for the subsequent layers. The term DenseNet derives from the fact that the dependency graph between the variables is rather dense. The DenseNet has several advantages over other state-of-the-art architecture as it alleviates the vanishing gradient problem, strengthens feature propagation, encourages feature reuse, and reduces the number of parameters.

The artwork feature extractor such as the DenseNet is configured to build a hierarchy of visual features where the earlier layers represent simple edges and shapes, and the later layers represent higher-level concepts like complex objects and shapes. To obtain the one or more neural features $F_{dense}$, the artworks are first passed through the artwork feature extractor such as the DenseNet, then $F_{dense}$ is extracted from the last dense block, which returns features of shape 7x7x1024 for each artwork. The $F_{dense}$ is then global average pooled to get compact one-dimensional feature vectors of size 1024.

At step 204b, the feature vector associated to each artwork of the plurality of artworks is passed to an encoder of the autoencoder, to generate a latent embedded feature space vector associated to each artwork of the plurality of artworks. The latent embedded feature space vector associated to each artwork includes non-linear mappings associated to each artwork.

The autoencoder is a deep neural network that is configured to project the feature vector of each artwork obtained at step 204a (as an input data) into latent space using the encoder and reconstruct the original input from the latent space using a decoder. The encoder present in the autoencoder first takes the input data and transforms the data with a non-linear mapping $\phi: X \to Z$ where $X$ is the input space of the data and $Z$ is the hidden latent space. The decoder learns to reconstruct the original input based on the latent representation, $\psi: Z \to X$. The latent embedded features are then propagated through the decoder so it can reconstruct the latent features back to the original input space. The non-linear mapping of $\phi$ and $\psi$ is learnt by updating the autoencoder parameters by minimizing a classic mean squared reconstruction loss:

$$L_r = \frac{1}{n} \sum_{i=1}^{n} \|x_i' - x_i\|^2 = \frac{1}{n} \sum_{i=1}^{n} \|\psi(\phi(x_i)) - x_i\|^2 \qquad (1)$$

where n is the cardinality of the input features, $x_i$ is the i-th input sample, $x_i'$ is the reconstruction performed by the decoder and $\|.\|$ is the Eucledian Distance.

At step 204c, the latent embedded feature space vector associated to each artwork of the plurality of artworks, generated at step 204b, to the clustering network layer to generate one or more initial artwork clusters. Each initial artwork cluster of the one or more initial artwork clusters includes one or more artworks of the plurality of artworks. The one or more initial artwork clusters generated at this step are the initial clusters formed using the clustering network layer.

The clustering network layer is configured to learn a mapping from the data space to a lower-dimensional feature space which is iteratively optimized with a clustering objective. In an embodiment, the clustering network layer is a Deep Embedded Clustering (DEC) model.

The clustering network layer takes the latent embedded features from the encoder based on the non-linear mapping $\phi: X \to Z$ and initially assigns each embedded point to $k$ cluster centroids by using k-means clustering $\{c_j \in Z\}_{j=1}^{k}$ where $c_j$ represents the $j$th cluster centroid. The decoder is abandoned as we will be clustering based on the embedded data points. After the initialization, each embedded point, $z_i = \phi(x_i)$ is mapped to a cluster centroid $c_j$ by using a cluster assignment $Q$ ased on Student's t-distribution:

$$q_{ij} = \frac{(1 + \|z_i - c_j\|^2)^{-1}}{\sum_{j'} (1 + \|z_i - c_j\|^2)^{-1}} \qquad (2)$$

Where $j$ represent every cluster and $q_{ij}$ represents the membership probability of $z_i$ to belong to the cluster $j$ which basically soft assigns of $z_i$ to cluster centroid $c_j$. Here, $q_{ij}$ represents the similarity between a datapoint $z_i$ and the cluster centroid $c_j$ which gives us the confidence of a datapoint being assigned to a particular cluster.

The clustering network layer then optimizes the auxiliary target distribution $p_{ij}$ calculated from $q_{ij}$ derived from equation 2 which emphasizes the data points that have higher confidence assigned to them while also minimizing the loss contribution of each centroid:

$$p_{ij} = \frac{q_{ij}^2 / f_j}{\sum_{j'} q_{ij'}^2 / f_{j'}} \qquad (3)$$

Where $f_j = \sum_j q_{ij}$ are the soft cluster frequencies. The clustering network layer optimizes the target function by minimizing the Kullback-Leibler (KL) divergence between $P$ and $Q$ where $P$ is the auxiliary target function defined in the equation 3 and $Q$ is the cluster assignment based on Student's t-distribution. This improves the initial cluster estimate by learning from previous high-confidence predictions.

$$L_c = KL(P//Q) = \sum_i \sum_j p_{ij} \log(\frac{p_{ij}}{q_{ij}}) \qquad (4)$$

Thus, the plurality of artworks is passed through the artwork feature extractor to obtain the artwork features $F_{dense}$. Then, the artwork features $F_{dense}$ are passed to the autoencoder which encodes these features into lower dimension feature space. The clustering network layer employs the K-Means clustering algorithm to obtain the initial set of clusters. Student's t-distribution is used to calculate the membership probabilities between the data points and the initial cluster centroids.

This membership probability acts as a soft assignment between the data points and the cluster centroids. Then, an auxiliary target distribution is calculated based on the membership probability calculated earlier. The auxiliary target distribution is designed to place greater emphasis on the data points assigned with greater confidence while normalizing the loss contribution of each centroid. Then the KL divergence between the membership probabilities and auxiliary target distribution is minimized to obtain the clusters from the clustering network layer.

At step 204d, the one or more initial artwork clusters generated at step 204c are passed to the preference feedback layer, to specify one or more preference feedback operations required for each initial artwork cluster of the one or more initial artwork clusters. After obtaining the first set of $k$ clusters from the clustering network layer, the sample operation is performed to obtain a few samples from each cluster which is presented to an intelligent agent or a user.

The intelligent agent or the user is then asked to perform the expand operation where they identify and segregate the outliers present in each cluster based on artistic style. Then the intelligent agent or the user is asked to merge the clusters that are similar in artistic style. Since the intelligent agent or the user was asked to give feedback on only a few samples, the expand and merge operations performed by the intelligent agent, or the user are projected on the sample-clusters to the original clusters. Thus, the preference feedback layer is configured to perform the sample operations, the expand operations, the merge operations, and the projection operations.

In an embodiment, the intelligent agent comprises the knowledge about the initial clusters and the artworks present in each of the initial clusters. Further, the intelligent agent is configured to perform the sample operations, the expand operations, the merge operations, and the projection operations. In an embodiment, the intelligent agent may be an artificial Intelligence (AI) trained agent, a machine learning (ML) trained agent, a rule-based engine, or an any other mechanism that can perform the said operations. In an embodiment, the user is a human and the sample artworks are presented or displayed to the human through the GUI for determining the expand and merge operations that are required for the clusters obtained at each iteration.

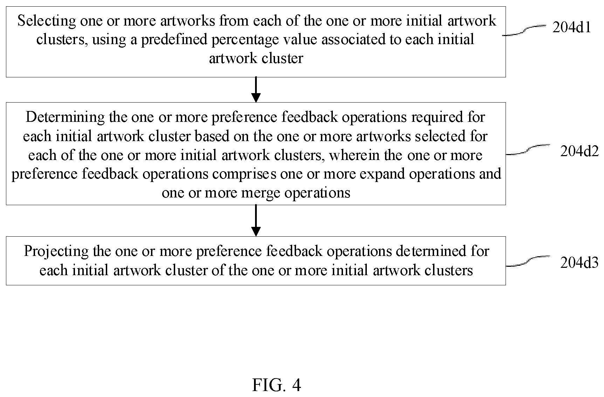

FIG. 4 is a flowchart showing the steps for passing the one or more initial artwork clusters to the preference feedback layer, to specify one or more preference feedback operations required for each initial artwork cluster of the one or more initial artwork clusters, in accordance with some embodiments of the present disclosure. As shown in FIG. 4, passing the one or more initial artwork clusters to the preference feedback layer, to specify one or more preference feedback operations required for each initial artwork cluster of the one or more initial artwork clusters is explained through steps 204d1 to 204d3.

At step 204d1, one or more artworks are selected from each of the one or more initial artwork clusters, using a predefined percentage value $p$ associated to each initial artwork cluster. The predefined percentage value $p$ is determined based on the number of artworks present in each initial artwork cluster.

The intelligent agent or the user is asked to provide the percentage of artwork samples ($p$) to be displayed from each initial cluster. Based on the percentage $p$ provided, $p$ percentage of artwork samples are randomly sampled from each initial cluster $\{C_i\}_{i=1}^{k}$ and presented to the intelligent agent or the user. The number of samples presented for each initial cluster is denoted by $\{n_i\}_{i=1}^{k}$. If $n_i$ is less than 1, then all the artwork samples are presented in the initial cluster. These $n_i$ artwork samples from each initial cluster $C_i$ are considered as the *sample-cluster* of $C_i$ and is denoted as $sc_i$. Then, the artwork samples selected at this step are performed with the expand operation for each of the one or more initial artwork clusters.

At step 204d2, the one or more preference feedback operations required for each initial artwork cluster is determined based on the one or more artworks selected for each of the one or more initial artwork clusters. The one or more preference feedback operations include one or more expand operations and one or more merge operations.

For the sample-cluster $sc_i$, if the intelligent agent or the user finds that the artwork sample $\{s_m\}_{m=1}^{n_i}$ is not stylistically similar to the rest $n_i$ - 1 samples in $sc_i$, then the expand operation is required in which a new sample-cluster $sc_j$ is created where $j > k$ and $s_m$ is removed from $sc_i$ and moved it to $sc_j$. The expand operation creates a new sample-cluster $sc_j$ that represents the style of $s_m$. This process is repeated for all the samples in $sc_i$ to determine how many such expand operations are required for sample-cluster $sc_i$. The new set of sample-clusters are obtained as a result of this step where the total number of sample-clusters is denoted by $k_{expand}$. Then, $k_{expand}$ sample-clusters are then performed with the one or more merge operations.

Given two sample-clusters $sc_i$ and $sc_l$ ($1 \leq i \neq l \leq k_{expand}$) the intelligent agent or the user is asked to check and see if the style of the artworks is similar across both sample-clusters $sc_i$ and $sc_l$ If the intelligent agent or the user finds the style of the artworks present in both sample clusters to be similar, then the merge operation (combine operation) is required to merge the sample-clusters $sc_i$ and $sc_l$. Similar process is followed for all the $k_{expand}$ sample-clusters until all the sample-clusters with similar style are present and accordingly the one or more merge operations required are determined. The new set of sample-clusters are obtained after merge operations where the total number of sample-clusters is denoted by $k_{merge}$. Then, $k_{merge}$ sample-clusters are then performed with the one or more projection operations.

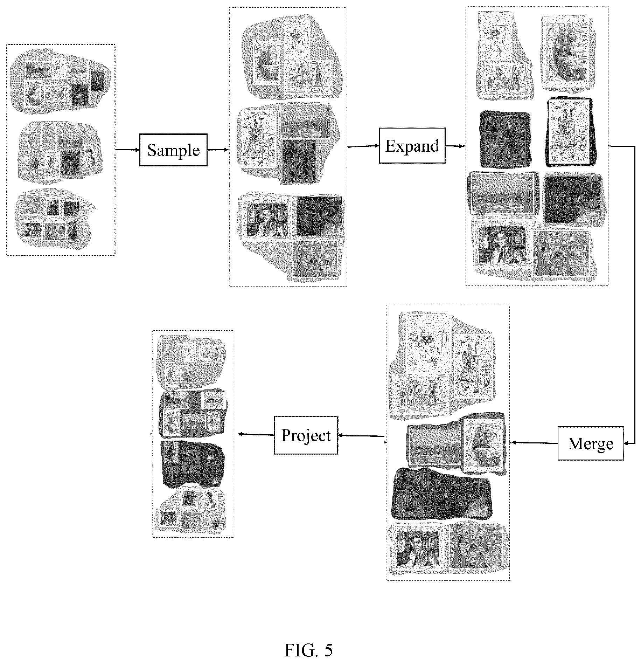

At step 204d3, the one or more preference feedback operations determined at step 204d2 for each initial artwork cluster of the one or more initial artwork clusters are projected. FIG. 5 shows an outcome of exemplary preference feedback operations of the preference feedback mechanism on a set of clusters comprising of artworks, in accordance with some embodiments of the present disclosure.

At step 204e, the one or more preference feedback operations associated to each initial artwork cluster of the one or more initial artwork clusters are performed to obtain one or more intermediate artwork clusters. The one or more preference feedback operations associated to each initial artwork cluster results in a new artwork cluster, or a deletion of an artwork cluster based on the style of each artwork present in each of the one or more initial artwork clusters as explained in steps 204d2.

The expand and merge operations are performed on the initial clusters $\{C_i\}_{i=1}^{k}$ and match the operations performed on the sample-clusters. For every sample $s_m$ that is removed from $sc_i$ (sample-cluster of $C_i$) and moved it to a new sample-cluster $sc_j$ through the expand operation. After that, the sample $s_m$ is removed from $C_i$ and a new cluster $C_j$ is created with $s_m$. Here, $j > k$ and $k_{expand}$ clusters are obtained. Based on these $k_{expand}$ clusters, for every merge operation where two sample-clusters $sc_i$ (sample-cluster of $C_i$) and $sc_l$ (sample-cluster of $C_l$) are merged, the corresponding clusters $C_i$ and $C_l$ are merged. In this way, the one or more preference feedback operations associated to each initial artwork cluster of the one or more initial artwork clusters are performed to obtain one or more intermediate artwork clusters ($k_{merge}$ sample-clusters).

At step 204f, the one or more intermediate artwork clusters are passed to the clustering network layer, to obtain one or more initial style-based artwork clusters. Each of the one or more initial style-based artwork clusters includes one or more artworks of the plurality of artworks clustered based on the style that the intelligent agent or the user is interested in the clustering of the plurality of the artwork samples.

At step 204g, the steps (204d) through (204f) are repeated by considering the one or more initial style-based artwork clusters as the one or more initial artwork clusters, until a predefined criteria is met, to obtain the one or more style-based clusters. The one or more style-based clusters are the final style-based clusters with the preference feedback that the intelligent agent or the user is provided.

In an embodiment, the predefined criteria are defined as one of the conditions of the two conditions are met. The first condition is when a metric value determined for the one or more initial style-based artwork clusters is decreasing between consecutive iterations. Here the iterations are between the clustering network layer, and a preference feedback layer until the final style-based clusters are obtained. In an embodiment, the metric value is one of a Silhouette Coefficient (SC) and Calinski Harabasz Index (CHI).

The Silhouette coefficient (SC) is the measure of how similar a data point is to other data points in its own cluster and how similar the same data point is to the data points in a separate cluster. The silhouette coefficient ranges from -1 to +1, where a high value indicates that the data points are well-matched to their own clusters and poorly matched to other clusters. A lower value, from -1 to 0, would indicate that the data points are wrongly assigned to clusters.

Calinski Harabasz Index (CHI) is the ratio of the sum of between-cluster dispersion and inter-cluster dispersion for all clusters. A higher value of CHI indicates that the data points are more spread out between clusters than they are within clusters.

The second condition is when the one or more preference feedback operations required for each initial artwork cluster are not present. The second condition utilizes a guidance metric which allows the intelligent agent or the user to gauge the difficulty of providing the preference feedback after each iteration. The guidance metric is named as *Z - metric,* which is given by:

$$Z - metric = \frac{oper}{k_{initial}}$$

where *oper* is the number of the expand and the merge operations performed in a cycle and $k_{initial}$ is the number of initial clusters in an iteration. The *Z - metric* signifies how difficult it is for a user to perform the expand and merge operations. A lower value would indicate that it is difficult for the intelligent agent or the user to perform the expand and merge operations on the cluster representations that are presented to them. A higher value would indicate that the intelligent agent or the user can relatively easily perform the operations on the set of clusters. The *Z - metric* can be used as a guideline to stop the process of the preference feedback when the metric score start decreasing.

The methods and systems of the present disclosure discloses a comprehensive framework for style-based clustering of artworks. To best capture the style-level features, the preference feedback is proposed as the loop. The disclosed framework allows the intelligent agent of the user to effectively cluster the artworks by providing feedback for very few iterations and on a very small subset of the dataset.

Example Scenario:

The methods and systems of the present disclosure were evaluated using the two datasets namely, the WikiArt dataset and the Edvard Munch archive, to check the performance and the accuracy. The WikiArt dataset is a collection of digitized artworks encompassing artists from several art movements from multiple artists. Out of the entire dataset the WikiArt dataset containing 78,978 artworks was considered in the present disclosure. While the WikiArt dataset has artworks from multiple artists, the Munch archive was considered for the experiments which contains the artwork collection dedicated to a particular artist. 7411 artworks created by Edvard Munch were considered in the present disclosure.

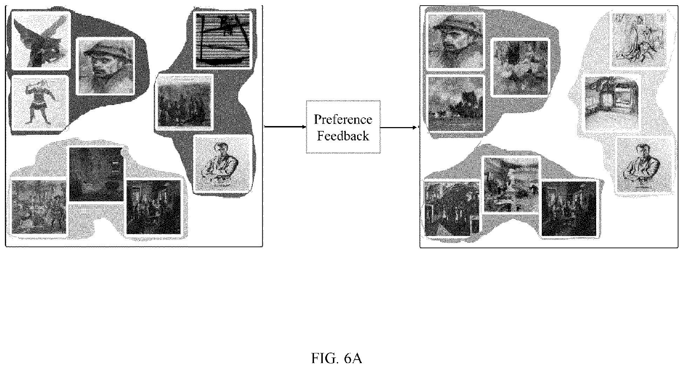

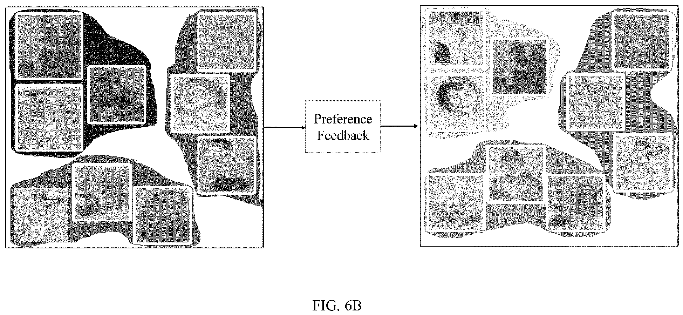

The artworks were first passed to the DenseNet model to obtain $F_{dense}$. Then the $F_{dense}$ were passed to the autoencoder and the DEC model to obtain the initial set of clusters. Next, the preference feedback was applied using the intelligent agent to the initial set of clusters to obtain the clusters with the preference feedback which were then passed through the cluster initialization block of the DEC model and obtained the artwork clusters. This process was repeated for more iterations and obtained the artwork clusters. Different values of number of initial clusters ($k$) were considered during the experiments where $k = 4$, $k = 8$, and $k = 16$. For the WikiArt dataset, $k = 16$ was also considered as it is the large dataset. The percentage of samples presented to the intelligent agent was 0.03% for the Wikiart dataset and 0.01% for Edvard Munch archive. The experiments were conducted on an A100 GPU with 15 GB RAM and 5GB VRAM. The deep embedded clustering (DEC) model was trained using Adam optimizer. The number of iterations was set to 8000 and the convergence threshold was set to 0.0001.FIG. 6A shows comparison of style-based clustering results of a generic deep embedded clustering model and the unsupervised clustering network model of the present disclosure on Wikiart dataset artworks after a single feedback iteration. FIG. 6B shows comparison of style-based clustering results of a generic deep embedded clustering model and the unsupervised clustering network model of the present disclosure on Edvard Munch digital archive artworks after a single feedback iteration. As shown in FIG. 6A and 6B, some random samples from a few clusters that are obtained after a single iteration of the preference feedback are presented on the Edvard Munch archive as well as the WikiArt dataset. As the preference provides feedback on just the artworks without being provided any extra information regarding the artworks, the clustering model is still able to produce stylistic clusters. This achieves the objective of the present disclosure of allowing the intelligent agent to provide the feedback with no additional information given to the intelligent agent about the artistic style of the artwork. It is imperative that a user such as the human can also provide the preference feedback to produce stylistic clusters with no additional information given to the user.

The results of the above-mentioned experiments were quantitatively evaluated using the two metrics, the Silhouette Coefficient (SC) and the Calinski Harabasz Index (CHI). Further the guidance metric results were presented using the *Z - metric*.

For the Edvard Munch archive, it was observed that for each experiment, the preference feedback layer of the present disclosure outperforms the results obtained from the initial set of clusters (number of iterations=0) for both the Silhouette Coefficient and Calinski Harabasz index after just a few iterations (1-2). This signifies that after just a few iterations of the preference feedback, the clusters were dense in nature and far apart from each other which achieves the objective of obtaining distinct clusters based on artistic style with minimal-iterative feedback.

The total number of samples presented to the intelligent agent to allow them to provide preference feedback was very small (25-50 samples). Even though the feedback was provided by the intelligent agent on a small subset, the clustering model of the present disclosure was able to produce distinct clusters which further satisfies the design objective of providing feedback on a few samples. For the Wikiart dataset, it was observed that Calinski Harabasz index increases after a few iterations (1-2) of the preference feedback when $k = 4$, $k = 16$, and $k = 24$. The Silhouette coefficient on the other hand shows a linear or downward trend for all values of k except when and $k = 24$. Such a behaviour was expected on the larger datasets (such as WikiArt) with artworks from multiple artists and diverse artistic styles. The smaller values of $k$ offers limited options to put artworks in different style clusters whereas higher values of $k$ help the clustering to put artworks in distinct style clusters.

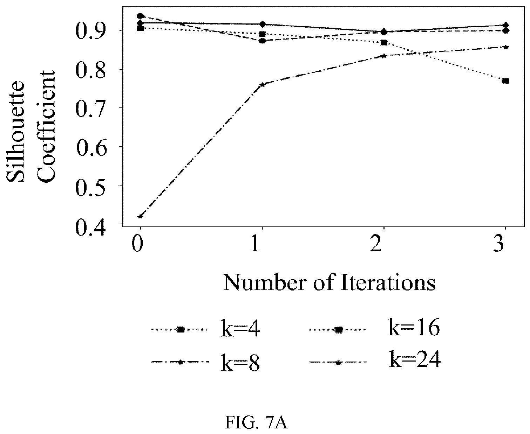

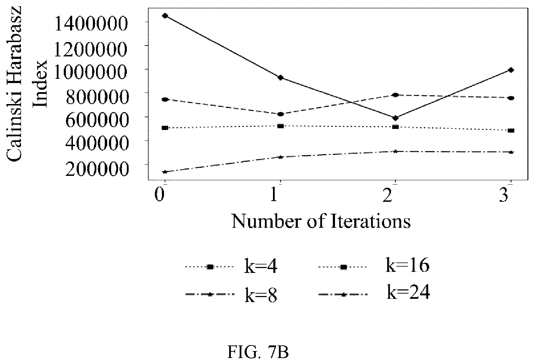

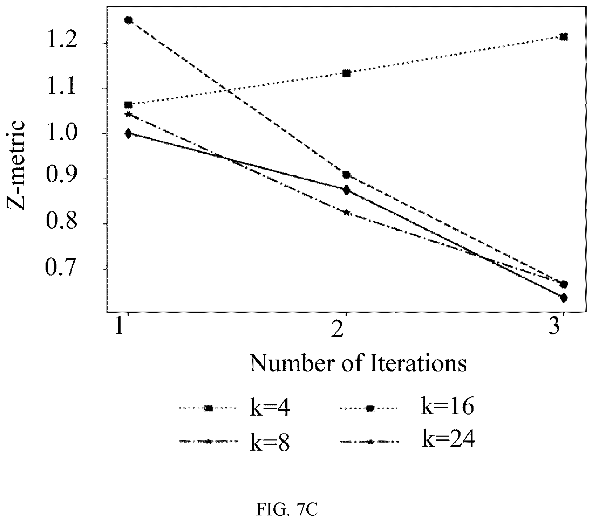

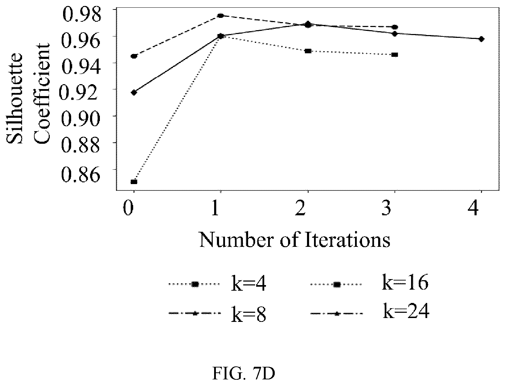

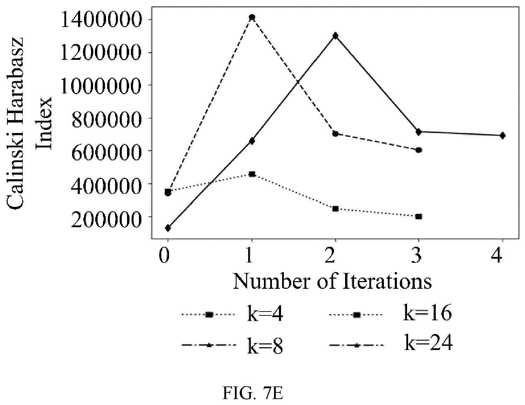

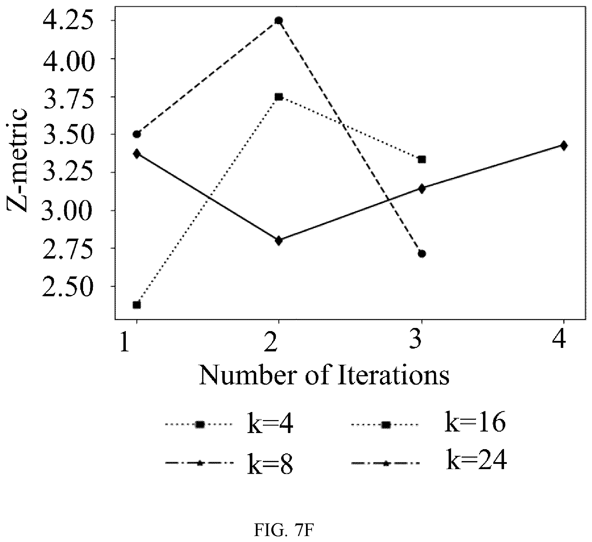

FIGS. 7A-7C are graphs showing results of quantitative and guidance metrics for Wikiart dataset for different number of initial clusters, in accordance with some embodiments of the present disclosure. FIGS. 7D-7F are graphs showing results of quantitative and guidance metrics for Edvard Munch archive for different number of initial clusters, in accordance with some embodiments of the present disclosure. As shown in FIGS. 7A-7C and FIGS. 7D-7F, the quantitative metrics of Silhouette Coefficient and Calinski Harabasz index, and the guidance metric i.e., *Z - metric* are plotted for different number of initial clusters $k = 4$, $k = 8$, and $k = 16$. For the WikiArt dataset, we also present results where $k = 24$. When the number of iterations is 0, it signifies the results obtained from the DEC model without any preference feedback.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problems of style-based clustering of artworks with preference feedback, which discloses a preference feedback mechanism or loop with four operations: sample, expand, merge, and project. The sample operation facilitates the selection of samples for feedback. The preference feedback on the selected subset of the dataset is captured through the expand and merge operations. Finally, the preference feedback is projected on the entire dataset through the project operation. The methods and systems of the present disclosure drive a generic clustering models to cluster artworks based on artistic style with the introduction of minimal preference feedback.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method (200), comprising:

   receiving, via one or more input/output (I/O) interfaces, a plurality of artworks associated with one or more styles from a repository, that are to be clustered based on a style of the one or more styles (202);
   clustering, via one or more hardware processors, the plurality of artworks using an unsupervised clustering network model, to obtain one or more style-based clusters, wherein each of the one or more style-based clusters comprises one or more artworks of the plurality of artworks having a same style of the one or more styles, wherein the unsupervised clustering network model comprises an artwork feature extractor, an autoencoder, a clustering network layer, and a preference feedback layer (204), and wherein clustering the plurality of artworks using the unsupervised clustering network model to obtain the one or more style-based clusters comprising:

(a) passing each artwork of the plurality of artworks, to the artwork feature extractor, to obtain a feature vector of each artwork, wherein the feature vector of each artwork comprises one or more neural features associated to each artwork (204a);

(b) passing the feature vector associated to each artwork of the plurality of artworks, to an encoder of the autoencoder, to generate a latent embedded feature space vector associated to each artwork of the plurality of artworks, wherein the latent embedded feature space vector associated to each artwork comprises non-linear mappings associated to each artwork (204b);

(c) passing the latent embedded feature space vector associated to each artwork of the plurality of artworks, to the clustering network layer, to generate one or more initial artwork clusters, wherein each initial artwork cluster of the one or more initial artwork clusters comprises one or more artworks of the plurality of artworks (204c);

(d) passing the one or more initial artwork clusters to the preference feedback layer, to specify one or more preference feedback operations required for each initial artwork cluster of the one or more initial artwork clusters (204d);

(e) perform the one or more preference feedback operations associated to each initial artwork cluster of the one or more initial artwork clusters, to obtain one or more intermediate artwork clusters, wherein the one or more preference feedback operations associated to each initial artwork cluster results in a new artwork cluster, or a deletion of an artwork cluster based on the style of each artwork present in each of the one or more initial artwork clusters (204e);

(f) passing the one or more intermediate artwork clusters to the clustering network layer, to obtain one or more initial style-based artwork clusters, wherein each of the one or more initial style-based artwork clusters comprises one or more artworks of the plurality of artworks clustered based on the style (204f); and

(g) repeating the steps (d) through (f) by considering the one or more initial style-based artwork clusters as the one or more initial artwork clusters, until a predefined criteria is met, to obtain the one or more style-based clusters (204g).

2. The processor-implemented method as claimed in claim 1, wherein passing the one or more initial artwork clusters to the preference feedback layer, to specify one or more preference feedback operations required for each initial artwork cluster of the one or more initial artwork clusters, comprising:

selecting one or more artworks from each of the one or more initial artwork clusters, using a predefined percentage value associated to each initial artwork cluster (204d1);

determining the one or more preference feedback operations required for each initial artwork cluster based on the one or more artworks selected for each of the one or more initial artwork clusters, wherein the one or more preference feedback operations comprises one or more expand operations and one or more merge operations (204d2); and

projecting the one or more preference feedback operations determined for each initial artwork cluster of the one or more initial artwork clusters (204d3).

3. The processor-implemented method as claimed in claim 1, wherein the predefined criteria is defined as one of: (i) a metric value determined for the one or more initial style-based artwork clusters is decreasing between consecutive iterations, and (ii) the one or more preference feedback operations required for each initial artwork cluster are not present.

4. A system (100), comprising:

a memory (102) storing instructions;
one or more input/output (I/O) interfaces (106);
one or more hardware processors (104) coupled to the memory (102) via the one or more I/O interfaces (106), wherein the one or more hardware processors (104) are configured by the instructions to:

receive a plurality of artworks associated with one or more styles from a repository, that are to be clustered based on a style of the one or more styles;
cluster the plurality of artworks using an unsupervised clustering network model, to obtain one or more style-based clusters, wherein each of the one or more style-based clusters comprises one or more artworks of the plurality of artworks having a same style of the one or more styles, wherein the unsupervised clustering network model comprises an artwork feature extractor, an autoencoder, a clustering network layer, and a preference feedback layer, and wherein clustering the plurality of artworks using the unsupervised clustering network model to obtain the one or more style- based clusters comprising:

(a) passing each artwork of the plurality of artworks, to the artwork feature extractor, to obtain a feature vector of each artwork, wherein the feature vector of each artwork comprises one or more neural features associated to each artwork;

(b) passing the feature vector associated to each artwork of the plurality of artworks, to an encoder of the autoencoder, to generate a latent embedded feature space vector associated to each artwork of the plurality of artworks, wherein the latent embedded feature space vector associated to each artwork comprises non-linear mappings associated to each artwork;

(c) passing the latent embedded feature space vector associated to each artwork of the plurality of artworks, to the clustering network layer, to generate one or more initial artwork clusters, wherein each initial artwork cluster of the one or more initial artwork clusters comprises one or more artworks of the plurality of artworks;

(d) passing the one or more initial artwork clusters to the preference feedback layer, to specify one or more preference feedback operations required for each initial artwork cluster of the one or more initial artwork clusters;

(e) perform the one or more preference feedback operations associated to each initial artwork cluster of the one or more initial artwork clusters, to obtain one or more intermediate artwork clusters, wherein the one or more preference feedback operations associated to each initial artwork cluster results in a new artwork cluster, or a deletion of an artwork cluster based on the style of each artwork present in each of the one or more initial artwork clusters;

(f) passing the one or more intermediate artwork clusters to the clustering network layer, to obtain one or more initial style-based artwork clusters, wherein each of the one or more initial style-based artwork clusters comprises one or more artworks of the plurality of artworks clustered based on the style; and

(g) repeating the steps (d) through (f) by considering the one or more initial style-based artwork clusters as the one or more initial artwork clusters, until a predefined criteria is met, to obtain the one or more style-based clusters.

5. The system as claimed in claim 4, wherein the one or more hardware processors (104) are configured by the instructions to pass the one or more initial artwork clusters to the preference feedback layer, to specify one or more preference feedback operations required for each initial artwork cluster of the one or more initial artwork clusters, by:

selecting one or more artworks from each of the one or more initial artwork clusters, using a predefined percentage value associated to each initial artwork cluster;

determining the one or more preference feedback operations required for each initial artwork cluster based on the one or more artworks selected for each of the one or more initial artwork clusters, wherein the one or more preference feedback operations comprises one or more expand operations and one or more merge operations; and

projecting the one or more preference feedback operations determined for each initial artwork cluster of the one or more initial artwork clusters.

6. The system as claimed in claim 4, wherein the predefined criteria is defined as one of: (i) a metric value determined for the one or more initial style-based artwork clusters is decreasing between consecutive iterations, and (ii) the one or more preference feedback operations required for each initial artwork cluster are not present.

7. One or more non-transitory machine-readable information storage mediums comprising one or more instructions which when executed by one or more hardware processors cause:

receiving a plurality of artworks associated with one or more styles from a repository, that are to be clustered based on a style of the one or more styles;

clustering the plurality of artworks using an unsupervised clustering network model, to obtain one or more style-based clusters, wherein each of the one or more style-based clusters comprises one or more artworks of the plurality of artworks having a same style of the one or more styles, wherein the unsupervised clustering network model comprises an artwork feature extractor, an autoencoder, a clustering network layer, and a preference feedback layer, and wherein clustering the plurality of artworks using the unsupervised clustering network model to obtain the one or more style-based clusters comprising:

(a) passing each artwork of the plurality of artworks, to the artwork feature extractor, to obtain a feature vector of each artwork, wherein the feature vector of each artwork comprises one or more neural features associated to each artwork;

(b) passing the feature vector associated to each artwork of the plurality of artworks, to an encoder of the autoencoder, to generate a latent embedded feature space vector associated to each artwork of the plurality of artworks, wherein the latent embedded feature space vector associated to each artwork comprises non-linear mappings associated to each artwork;

(c) passing the latent embedded feature space vector associated to each artwork of the plurality of artworks, to the clustering network layer, to generate one or more initial artwork clusters, wherein each initial artwork cluster of the one or more initial artwork clusters comprises one or more artworks of the plurality of artworks;

(d) passing the one or more initial artwork clusters to the preference feedback layer, to specify one or more preference feedback operations required for each initial artwork cluster of the one or more initial artwork clusters;

(e) perform the one or more preference feedback operations associated to each initial artwork cluster of the one or more initial artwork clusters, to obtain one or more intermediate artwork clusters, wherein the one or more preference feedback operations associated to each initial artwork cluster results in a new artwork cluster, or a deletion of an artwork cluster based on the style of each artwork present in each of the one or more initial artwork clusters;

(f) passing the one or more intermediate artwork clusters to the clustering network layer, to obtain one or more initial style-based artwork clusters, wherein each of the one or more initial style-based artwork clusters comprises one or more artworks of the plurality of artworks clustered based on the style; and

(g) repeating the steps (d) through (f) by considering the one or more initial style-based artwork clusters as the one or more initial artwork clusters, until a predefined criteria is met, to obtain the one or more style-based clusters.

8. The one or more non-transitory machine readable information storage mediums as claimed in claim 7, wherein passing the one or more initial artwork clusters to the preference feedback layer, to specify one or more preference feedback operations required for each initial artwork cluster of the one or more initial artwork clusters, comprising:

selecting one or more artworks from each of the one or more initial artwork clusters, using a predefined percentage value associated to each initial artwork cluster;

determining the one or more preference feedback operations required for each initial artwork cluster based on the one or more artworks selected for each of the one or more initial artwork clusters, wherein the one or more preference feedback operations comprises one or more expand operations and one or more merge operations; and

projecting the one or more preference feedback operations determined for each initial artwork cluster of the one or more initial artwork clusters.

9. The one or more non-transitory machine readable information storage mediums as claimed in claim 7, wherein the predefined criteria is defined as one of: (i) a metric value determined for the one or more initial style-based artwork clusters is decreasing between consecutive iterations, and (ii) the one or more preference feedback operations required for each initial artwork cluster are not present.

System **100**

**108**

Memory **102**

Modules **102a**

Repository **102b**

I/O interface(s) **106**

Hardware
processor(s) **104**

FIG. 1

200

Receive a plurality of artworks associated with one or more styles from a repository, that are to be clustered based on a style of the one or more styles

202

Cluster the plurality of artworks using an unsupervised clustering network model, to obtain one or more style-based clusters, wherein each of the one or more style-based clusters comprises one or more artworks of the plurality of artworks having a same style of the one or more styles, wherein the unsupervised clustering network model comprises an artwork feature extractor, an autoencoder, a clustering network layer, and a preference feedback layer, and wherein clustering the plurality of artworks using the unsupervised clustering network model to obtain the one or more style- based clusters comprising:

204

(a) passing each artwork of the plurality of artworks, to the artwork feature extractor, to obtain a feature vector of each artwork, wherein the feature vector of each artwork comprises one or more neural features associated to each artwork

204a

(b) passing the feature vector associated to each artwork of the plurality of artworks, to an encoder of the autoencoder, to generate a latent embedded feature space vector associated to each artwork of the plurality of artworks, wherein the latent embedded feature space vector associated to each artwork comprises non-linear mappings associated to each artwork

204b

(c) passing the latent embedded feature space vector associated to each artwork of the plurality of artworks, to the clustering network layer, to generate one or more initial artwork clusters, wherein each initial artwork cluster of the one or more initial artwork clusters comprises one or more artworks of the plurality of artworks

204c

A

FIG. 2A

A

(d) passing the one or more initial artwork clusters to the preference feedback layer, to specify one or more preference feedback operations required for each initial artwork cluster of the one or more initial artwork clusters — 204d

(e) perform the one or more preference feedback operations associated to each initial artwork cluster of the one or more initial artwork clusters, to obtain one or more intermediate artwork clusters, wherein the one or more preference feedback operations associated to each initial artwork cluster results in a new artwork cluster, or a deletion of an artwork cluster based on the style of each artwork present in each of the one or more initial artwork clusters — 204e

(f) passing the one or more intermediate artwork clusters to the clustering network layer, to obtain one or more initial style-based artwork clusters, wherein each of the one or more initial style-based artwork clusters comprises one or more artworks of the plurality of artworks clustered based on the style — 204f

(g) repeating the steps (d) through (f) by considering the one or more initial style-based artwork clusters as the one or more initial artwork clusters, until a predefined criteria is met, to obtain the one or more style-based clusters — 204g

FIG. 2B

Artwork Features

Autoencoder

Clustering Network Layer

(a)

Artwork Feature Extractor

$F$

Encoder

Decoder

Cluster Initialization

Deep Embedded Clustering

Preference Feedback layer

(b)

Sample → Expand → Merge → Project

FIG. 3

Selecting one or more artworks from each of the one or more initial artwork clusters, using a predefined percentage value associated to each initial artwork cluster — 204d1

Determining the one or more preference feedback operations required for each initial artwork cluster based on the one or more artworks selected for each of the one or more initial artwork clusters, wherein the one or more preference feedback operations comprises one or more expand operations and one or more merge operations — 204d2

Projecting the one or more preference feedback operations determined for each initial artwork cluster of the one or more initial artwork clusters — 204d3

FIG. 4

FIG. 5

FIG. 6A

FIG. 6B

FIG. 7A

FIG. 7B

FIG. 7C

FIG. 7D

FIG. 7E

FIG. 7F

Europäisches
Patentamt
European
Patent Office
Office européen
des brevets

# EUROPEAN SEARCH REPORT

**Application Number**

EP 25 18 4278

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SZYMON BOBEK ET AL: "KnAC: an approach for enhancing cluster analysis with background knowledge and explanations", ARXIV.ORG, CORNELL UNIVERSITY LIBRARY, 201 OLIN LIBRARY CORNELL UNIVERSITY ITHACA, NY 14853, 30 October 2022 (2022-10-30), XP091356645, * abstract * * chapters 1-4; page 1 - page 26; figures 1-13 * | 1-9 | INV. G06N3/045 G06N3/0455 G06N3/088 G06N3/091 G06N20/00 |
| X | BAE JUHEE JUHEE BAE@HIS SE ET AL: "Interactive Clustering", ACM COMPUTING SURVEYS (CSUR), ASSOCIATION FOR COMPUTING MACHINERY, vol. 53, no. 1, 5 February 2020 (2020-02-05), pages 1-39, XP058666644, DOI: 10.1145/3340960 * abstract * * chapters 1-5; page 1 - page 20 * | 1-9 | |
| X | YAZHOU REN ET AL: "Deep Clustering: A Comprehensive Survey", ARXIV.ORG, CORNELL UNIVERSITY LIBRARY, 201 OLIN LIBRARY CORNELL UNIVERSITY ITHACA, NY 14853, 9 October 2022 (2022-10-09), XP091338411, * abstract * * chapters 1-8; page 1 - page 15; figures 1-7 * | 1-9 | TECHNICAL FIELDS SEARCHED (IPC) G06N |

The present search report has been drawn up for all claims

| Place of search | Date of completion of the search | Examiner |
|---|---|---|
| The Hague | 13 October 2025 | Hasnas, Sergiu |

EPO FORM 1503 03.82 (P04C01)

**REFERENCES CITED IN THE DESCRIPTION**

**Patent documents cited in the description**

- IN 202421049443